# FASCICULE DE BREVET EUROPEEN

(11) **EP 2 709 790 B1**
(45) Date de publication et mention de la délivrance du brevet: **14.08.2019**
(21) Numéro de dépôt: 12728685.4
(22) Date de dépôt: 15.05.2012
(51) Int. Cl.: B23K 26/16, B23K 26/34, B29C 67/00

(54) **INSTALLATION DE FABRICATION D'UNE PIÈCE PAR FUSION SÉLECTIVE DE POUDRE**
EINRICHTUNG ZUM SELEKTIVEN LASERSINTERN ZUR HERSTELLUNG EINES BAUTEILS
LASER SELECTIVE SINTERING EQUIPMENT FOR MANUFACTURING PARTS

(30) Priorité: 20.05.2011 FR 1154415
(43) Date de publication de la demande: 26.03.2014
(73) Titulaire: Safran Aircraft Engines, 75015 Paris (FR)
(72) Inventeur: CASTAGNE, Jean-François, F-77550 Moissy Cramayel Cedex (FR); HEBUTERNE, Damien, F-77550Moissy Cramayel Cedex (FR); VILARO, Thomas, F-77550 Moissy Cramayel Cedex (FR)
(74) Mandataire: Robert, Mathias
(86) Numéro de dépôt international: PCT/FR2012/051076
(87) Numéro de publication internationale: WO 2012/160291

(56) Documents cités:
- DE-A1-102004 031 881
- US-A- 5 786 562
- US-A1- 2009 068 598

## Description

La présente invention concerne une installation de fabrication d'une pièce par fusion sélective de poudre à l'aide d'un faisceau laser ou d'un faisceau d'électrons, un tel procédé étant également connu sous les noms de Direct Metal Laser Sintering ou Electron Beam Melting.

On connaît dans la technique un procédé qui consiste à fabriquer une pièce par fusion de couches successives de poudre au moyen d'un faisceau laser ou d'un faisceau d'électrons commandé par un système de traitement de l'information dans lequel on a enregistré les coordonnées tridimensionnelles des points des couches successives à réaliser. De façon pratique, on dispose dans une cuve dont le fond est formé par un plateau mobile en translation, une première couche de poudre à l'aide d'un racleur ou d'un rouleau. La couche déposée sur le plateau présente une surface supérieure sur laquelle est dirigé et déplacé le faisceau laser ou le faisceau d'électrons. L'énergie apportée par ce faisceau provoque la fusion locale de la poudre qui, en se solidifiant, forme une première couche de la pièce métallique.

Après formation de cette première couche, le plateau est descendu d'une distance correspondant à l'épaisseur d'une couche, puis une seconde couche de poudre est amenée par le racleur sur la couche précédente. De la même manière que précédemment, une seconde couche de la pièce métallique est formée à l'aide du faisceau.

Ces opérations sont répétées jusqu'à fabrication complète de la pièce.

Ce procédé peut notamment être utilisé pour la réalisation de pièces ayant des épaisseurs de paroi faibles ou pour des pièces présentant des géométries complexes, difficilement réalisables par fonderie ou par usinage conventionnel.

Lors de la fusion de la poudre, des gouttes de métal en fusion sont projetées hors du bain liquide, c'est-à-dire hors de la zone en fusion non encore solidifiée, pour se déposer sur la poudre non fusionnée ou sur le métal déjà fusionné. Ces gouttes forment, en se solidifiant, des particules solides dont la granulométrie est supérieure à celle de la poudre.

Ces particules, du fait de leurs dimensions importantes (par exemple de l'ordre de 300 µm), ne peuvent pas être fondues par le faisceau. Par conséquent, toutes les particules retombant dans des zones qui seront balayées ultérieurement par le faisceau seront finalement présentes au coeur de la pièce finie, sans cohésion avec la matière qui les entoure. Elles forment des défauts fragilisant la pièce et dégradant ses caractéristiques mécaniques.

Seul un traitement thermique de diffusion, long et onéreux, permettrait de limiter les défauts dus à ces projections.

On connaît une solution qui consiste à aspirer les projections de poudre fondue, voir le document DE 10 2004 031 881 A1.

L'invention a notamment pour but d'apporter une solution simple, efficace et économique à ce problème.

A cet effet, elle propose une installation de fabrication d'une pièce par fusion sélective de poudre selon la revendication 1.

De cette manière, tout au long de la fusion de poudre, les projections de poudre fondue viennent s'accrocher sur l'élément de collecte après solidification, , sans risque de retomber sur la surface de la pièce à réaliser.

De préférence, l'élément de collecte est monté sur un cadre, les moyens de déplacement dudit élément de collecte comportant des moyens de déplacement du cadre suivant deux directions perpendiculaires.

Selon une caractéristique de l'invention, le cadre comporte un bord périphérique relié à l'élément de collecte, placé à l'intérieur du cadre, par l'intermédiaire de bras de liaison.

Selon l'invention, l'élément de collecte est une plaque, par exemple en forme de disque, présentant une ouverture de passage du faisceau et des projections de poudre fondue, cette ouverture ayant une section supérieure à celle du faisceau.

Ladite ouverture est évasée vers le haut, et est par exemple tronconique.

On évite ainsi que les gouttes ou les particules projetées vers le haut et qui ont une trajectoire en forme générale de parabole, touchent la paroi interne de l'ouverture et s'y s'agglomèrent. Les gouttes ou les projections de poudre fondue traversent donc entièrement l'ouverture pour retomber et se solidifier sur la face supérieure de la plaque de collecte.

En outre, la face supérieure de la plaque comporte des bords périphériques interne et externe en saillie vers le haut.

Cette caractéristique permet d'éviter que des particules qui ne seraient pas accrochées à la face supérieure de la plaque puissent retomber sur le lit de poudre. Le bord périphérique interne est défini par le bord de l'ouverture.

Ces bords en saillie sont par exemple formés par une face supérieure présentant une concavité annulaire, entourant l'ouverture.

L'invention concerne en outre un procédé de fabrication d'une pièce par fusion sélective de poudre à l'aide d'une installation du type précité, consistant à former couche par couche une pièce, par déplacement conjoint du faisceau et de l'élément de collecte, de manière à ce qu'au moins une partie des projections formées lors de la fusion de la poudre par le faisceau soit collectée par l'élément de collecte par solidification des projections de poudre fondue ayant impacté ou étant retombées sur l'élément de Collecte. L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'une installation de fabrication d'une pièce métallique par fusion sélective d'une poudre, selon l'art antérieur ;
- la figure 2 est une vue en perspective d'un élément de collecte et du cadre sur lequel il est monté, selon une première forme de réalisation de l'invention,
- la figure 3 est une vue en perspective de l'élément de collecte de la figure 2,
- la figure 4 est une vue agrandie d'une partie de l'élément de collecte des figures 2 et 3,
- les figures 5 et 6 sont des vues en perspective d'un élément de collecte selon une alternative qui n'est pas couverte par les revendications.

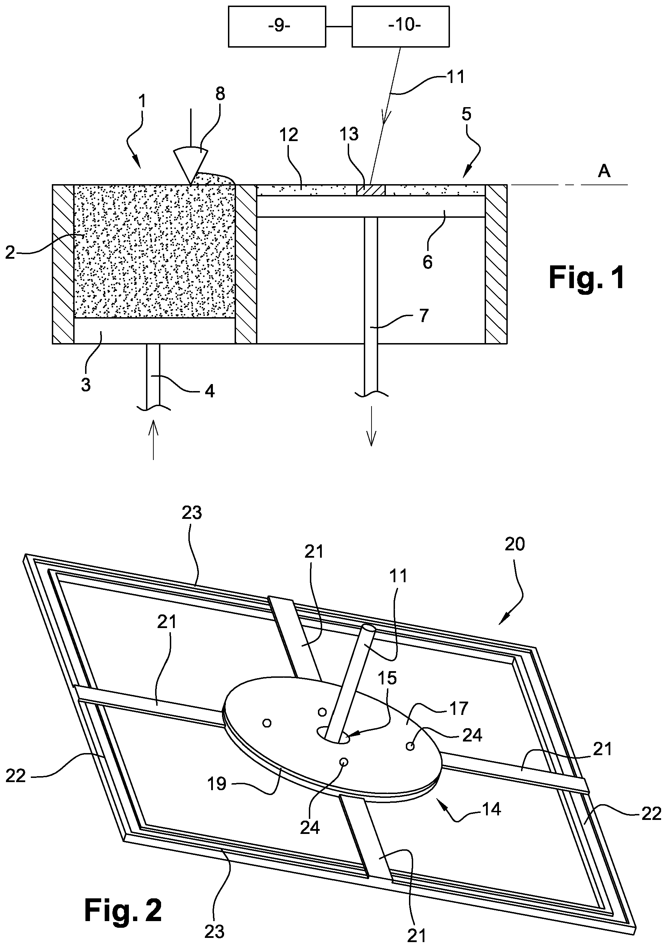

Une installation de fabrication d'une pièce métallique par fusion sélective d'une poudre est représentée à la figure 1. Elle comporte un réservoir 1 contenant une poudre métallique 2 et dont le fond 3 est mobile et déplaçable en translation par une tige 4 d'un vérin, et une cuve voisine 5 dont le fond est constitué par un plateau mobile 6, également déplaçable en translation par une tige 7 d'un vérin.

L'installation comporte un racleur 8 ou un rouleau permettant d'amener de la poudre du réservoir 1 vers la cuve 5, par déplacement sur un plan horizontal A, et des moyens 9 de génération d'un faisceau laser ou d'un faisceau d'électrons, couplés à un dispositif 10 permettant d'orienter et de déplacer le faisceau 11.

Les étapes de fabrication d'une pièce métallique à l'aide de cette installation sont les suivantes.

Tout d'abord, le fond 3 du réservoir 1 est déplacé vers le haut de manière à ce qu'une certaine quantité de poudre 2 soit située au-dessus du plan horizontal A. Le racleur 8 est alors déplacé de la gauche vers la droite, de manière à racler ladite couche de poudre 2 sur le dessus du réservoir 1 et l'amener dans la cuve 5. La quantité de poudre 2 et la position du plateau 6 sont déterminées de façon à former une couche 12 de poudre d'une épaisseur choisie et constante.

Un faisceau laser ou un faisceau d'électrons 11 balaye ensuite une zone déterminée de la couche 12 formée dans la cuve 5, de manière à fusionner localement la poudre 2, dans la zone balayée. Les zones fondues se solidifient en formant une première couche 13 de la pièce à fabriquer, cette couche 13 ayant par exemple une épaisseur de 10 à 100 µm.

Le plateau 6 est alors descendu de l'épaisseur de la couche réalisée puis une nouvelle couche de poudre 2 est amenée, de la même manière que précédemment, sur la première couche de poudre. Par déplacement contrôlé du faisceau 11, une seconde couche de la pièce métallique est formée sur la première couche 13.

Ces opérations sont répétées jusqu'à la réalisation complète de la pièce.

Dans le cas où la pièce est construite couche par couche par fusion sélective de la poudre 2 à l'aide d'un faisceau laser, la poudre 2 présente une granulométrie moyenne comprise entre 10 et 40 µm.

Dans le cas où la pièce est construite couche par couche par fusion sélective de la poudre 2 à l'aide d'un faisceau d'électrons, la poudre 2 présente une granulométrie moyenne comprise entre 50 et 100 µm.

Comme cela a été expliqué précédemment, des gouttes de métal en fusion peuvent être projetées hors du bain liquide, lors de la fusion locale de la poudre à l'aide du faisceau, pour se déposer sur la pièce en cours de fabrication. Ces gouttes forment, en se solidifiant, des particules de taille importante qui ne peuvent plus être fondues ultérieurement. Les pièces réalisées peuvent alors comporter des défauts à coeur, réduisant leur résistance mécanique.

Afin d'éviter cela, l'invention propose de récolter tout ou partie de ces projections ou de ces particules à l'aide d'un élément de collecte.

Une première forme de réalisation de l'invention est illustrée aux figures 2 à 4, dans laquelle l'élément de collecte est une coupelle 14 en métal ou en céramique, en forme de disque. L'élément de collecte 14 présente une ouverture centrale 15 de passage du faisceau 11 et des projections de poudre fondue, cette ouverture ayant une section supérieure à celle du faisceau. L'ouverture est tronconique et évasée vers le haut. Le diamètre de l'ouverture à son extrémité inférieure 16 est par exemple de l'ordre de 1 mm, alors que le diamètre du faisceau est de l'ordre de 50 à 100 µm.

La surface supérieure 17 de l'élément de collecte 14 présente une concavité annulaire entourant l'ouverture. Les bords périphériques radialement interne 18 et externe 19 sont donc surélevés par rapport à la zone médiane.

L'élément de collecte 14 est monté sur un cadre 20 comportant un bord périphérique de forme rectangulaire, relié à l'élément de collecte par l'intermédiaire de quatre bras de liaison 21. L'élément de collecte 14 est préférentiellement centré par rapport au cadre 20. Le cadre comporte ainsi deux bords latéraux 22 et deux bords longitudinaux 23 perpendiculaires, un bras reliant chaque bord 22, 23 au bord radialement externe 19 de l'élément de collecte 14.

Le cadre 20 est déplacé au-dessus de la couche 12 de poudre 2, par ses bords latéraux 22 et longitudinaux 23, suivant deux directions perpendiculaires, à l'aide de moyens appropriés. De tels moyens de déplacement sont bien connus de l'homme du métier et ne seront pas détaillés ici. Le cadre 20, et donc l'élément de collecte 14, sont déplacés conjointement avec le faisceau 11, en synchronisme avec celui-ci, de manière à ce que, quelle que soit la position du faisceau 11, ce dernier traverse l'ouverture 15 de l'élément de collecte 14.

La pièce est formée couche par couche, par déplacement conjoint du faisceau 11 et de l'élément de collecte 14. Le faisceau 11 traverse l'ouverture 15 et atteint la couche 12 de poudre 2 de manière à la fondre localement. L'impact du faisceau 11 dans le bain liquide génère, de même que dans l'art antérieur, des projections de gouttes ou de particules 24 qui ont sensiblement une trajectoire en parabole. Ces projections traversent l'ouverture 15, soit au niveau de la zone annulaire entre le bord de l'ouverture 15 et le faisceau 11, soit au travers du faisceau 11, puis retombent sur la surface supérieure concave 17 de l'élément de collecte 14. La distance entre le bain liquide et l'extrémité supérieure 18 de l'ouverture 15 est de l'ordre de 1 mm.

Les dimensions de cet élément de collecte 14 sont déterminées en fonction des paramètres de l'installation, tels notamment que la puissance du faisceau 11, afin de garantir que les gouttes ne soient pas projetées au-delà du bord radialement externe 19 de la surface supérieure 17. Le diamètre de l'élément de collecte 14 est par exemple de l'ordre de 50 à 100 mm.

La concavité de la surface supérieure 17 évite que les projections ou particules retombant sur la surface supérieure 17 ne roulent au-delà des bords radialement interne 18 et externe 19 de cette surface 17 et ne retombent sur la couche 12 de poudre 2.

Cette concavité permet également de favoriser le recueil des projections déjà solidifiées.

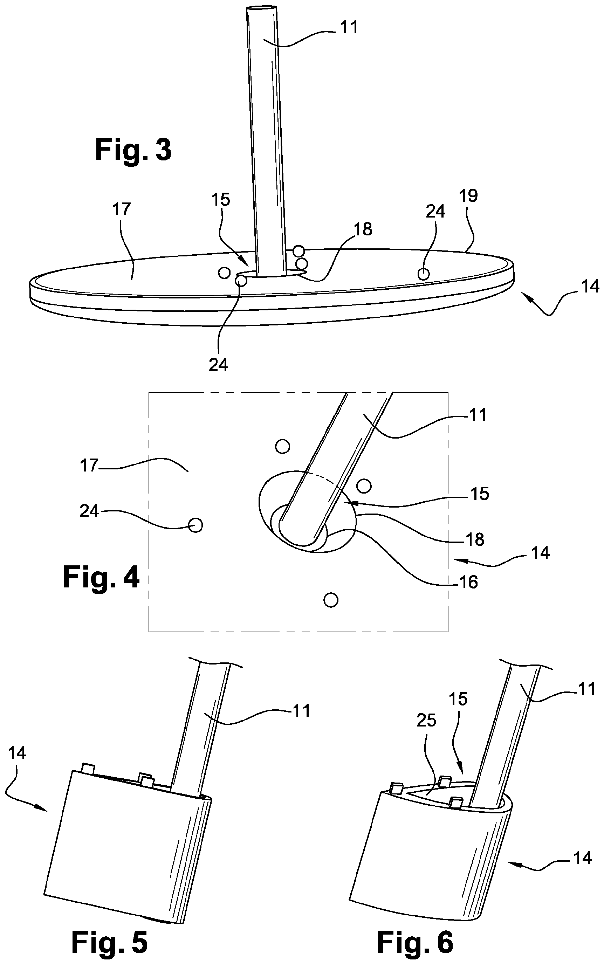

Les figures 5 ou 6 illustrent une alternative à l'invention, dans laquelle l'élément de collecte 14 est tubulaire et comporte une zone creuse formant l'ouverture 15 de passage du faisceau 11, les particules 24 étant destinées à être collectées sur la paroi interne 25 de la zone creuse. La hauteur de l'élément de collecte 14 tubulaire est de l'ordre de 20 mm.

La section de la zone creuse peut être circulaire ou effilée, comme représenté à la figure 6. La section effilée correspond à celle du bain liquide formé par la fusion de la poudre 2 à l'aide du faisceau 11. Ce bain comporte une partie amont sensiblement circulaire, correspondant à la zone fondue à un instant t par le faisceau 11, et une zone aval effilée, correspondant à une zone fondue précédemment qui est en cours de solidification.

Cet élément de collecte 14 peut être monté sur un cadre similaire à celui décrit précédemment, de façon à être déplacé conjointement au faisceau.

L'invention propose une installation dans laquelle, tout au long de la fusion de poudre 2, les gouttes ou les particules 24 projetées hors du bain liquide impactent ou retombent sur l'élément de collecte 14, de manière à s'y accrocher après solidification, sans risque de retomber sur la pièce en cours de fabrication.

Dans certains modes préférés de réalisation, l'invention est dépourvue de tout moyen d'aspiration et/ou d'air pulsé.

## Revendications

1. Installation de fabrication d'une pièce par fusion sélective de poudre, comportant des moyens de production d'un faisceau, par exemple un faisceau laser ou un faisceau d'électrons, et des moyens de déplacement du point d'impact du faisceau sur une couche (12) de poudre (2), **caractérisée en ce qu'**elle comporte un élément de collecte (14) de projections de poudre fondue (24) produites lors de la fusion locale de la poudre (2) par le faisceau (11), apte à collecter les projections de poudre fondue (24) venant impacter ou retomber sur celui-ci, de façon à ce qu'elles s'y accrochent après solidification, l'élément de collecte (14) étant une plaque présentant une ouverture (15) de passage du faisceau (11) et des particules (24), cette ouverture ayant une section supérieure à celle du faisceau (11), ladite ouverture (15) étant évasée vers le haut, la plaque (14) comportant des bords périphériques interne (18) et externe (19) en saillie vers le haut, et des moyens conçus pour déplacer ledit élément de collecte (14) conjointement avec le faisceau (11), au-dessus de la couche (12) de poudre (2).

2. Installation selon la revendication 1, **caractérisée en ce que** l'élément de collecte (14) est monté sur un cadre (20), les moyens de déplacement dudit élément de collecte comportant des moyens de déplacement du cadre (20) suivant deux directions perpendiculaires.

3. Installation selon la revendication 2, **caractérisé en ce que** le cadre (20) comporte un bord périphérique (22, 23) relié à l'élément de collecte (14), placé à l'intérieur du cadre (20), par l'intermédiaire de bras de liaison (21).

4. Installation selon l'une des revendications 1 à 3, **caractérisé en ce que** l'élément de collecte (14) présente une forme de disque.

5. Installation selon la revendication 4, **caractérisé en ce que** ladite ouverture (15) est tronconique.

6. Procédé de fabrication d'une pièce par fusion sélective de poudre (2) à l'aide d'une installation selon l'une des revendications 1 à 5, consistant à former couche par couche une pièce, par déplacement conjoint du faisceau (11) et de l'élément de collecte (14), de manière à ce qu'au moins une partie des projections (24) formées lors de la fusion de la poudre (2) par le faisceau (11) soit collectée par l'élément de collecte (14), par solidification des projections de poudre fondue (24) ayant impacté ou étant retombées sur l'élément de collecte (14)

## Patentansprüche

1. Einrichtung zum selektiven Lasersintern zur Herstellung eines Bauteils, umfassend Produktionsmittel eines Strahls, z. B. eines Laserstrahls oder eines Elektronenstrahls, und Verschiebungsmittel des Auftreffpunktes des Strahls auf einer Pulver-(2)-Schicht (12), **dadurch gekennzeichnet, dass** sie ein Erfassungselement (14) von Spritzern aus geschmolzenem Pulver (24) umfasst, die bei der lokalen Fusion des Pulvers (2) durch den Strahl (11) produziert werden, das geeignet ist, die Spritzer aus geschmolzenem Pulver (24) aufzufangen, das auf dieselbe auftrifft oder darauf herunterfällt, so dass sie dort nach der Verfestigung anhaftet, wobei das Erfassungselement (14) eine Platte ist, die eine Durchgangsöffnung (15) des Strahls (11) und der Partikel (24) aufweist, wobei diese Öffnung einen größeren Querschnitt aufweist als den des Strahls (11), wobei die genannten Öffnung (15) nach oben ausgeweitet ist, wobei die Platte (14) interne (18) und externe (19) umlaufende Ränder, die nach oben hervorstehen, und Mittel, die zum Verschieben des genannten Erfassungselements (14) gemeinsam mit dem Strahl (11) vorgesehen sind, oberhalb der Pulver-(2)-Schicht (11) aufweist.

2. Einrichtung gemäß Anspruch 1, **dadurch gekennzeichnet, dass** das Erfassungselement (14) auf einem Rahmen (20) montiert ist, wobei die Verschiebungsmittel des genannten Erfassungselements Verschiebungsmittel des Rahmens (20) gemäß zwei lotrechten Richtungen umfassen.

3. Einrichtung gemäß Anspruch 2, **dadurch gekennzeichnet, dass** der Rahmen (20) einen umlaufenden Rand (22, 23) umfasst, der mit dem Erfassungselement (14) verbunden ist, das im Innern des Rahmens (2) anhand von Verbindungsarmen (21) platziert ist.

4. Einrichtung gemäß einem der Ansprüche 1 bis 3, **dadurch gekennzeichnet, dass** das Erfassungselement (14) eine Scheibenform aufweist.

5. Einrichtung gemäß Anspruch 5, **dadurch gekennzeichnet, dass** die genannte Öffnung (15) kegelstumpfartig ist.

6. Herstellungsverfahren zum selektiven Lasersintern eines Bauteils (2) mithilfe einer Einrichtung gemäß einem der Ansprüche 1 bis 5, bestehend im Bilden eines Bauteils Schicht für Schicht durch gemeinsames Verschieben des Strahls (11) und des Erfassungselements (14), so dass wenigstens ein Teil der Spritzer (24), die bei der Fusion des Pulvers (2) durch den Strahl (11) gebildet werden, durch das Erfassungselement (14) per Verfestigung der Spritzer aus geschmolzenem Material (24), das auf das Erfassungselement aufgetroffen oder darauf heruntergefallen ist, erfasst wird.

## Claims

1. A tool for manufacturing a part by selectively melting a powder, comprising means for producing a beam, for example a laser beam or an electron beam, and means for moving the point of impact of the beam over a layer (12) of powder (2), **characterized in that** it comprises an element (14) for collecting molten powder spray (24) produced when the powder (2) is locally melted by the beam (11), that is able to collect the molten powder spray (24) which impacts or falls on same, so that it adheres thereto after solidifying, with the collecting means (14) being a plate having an aperture (15) allowing the beam (11) and the spray (24) to pass, with the aperture having a section greater than that of the beam (11), with said aperture (15) being enlarged in the upward direction, with the plate (14) comprising internal (18) and external (19) peripheral edges projecting upwards, and means adapted to move said collecting element (14) jointly with the beam (11), above the layer (12) of powder (2).

2. A tool according to claim 1, **characterized in that** the collecting element (14) is mounted on a frame (20), with the means for moving said collecting element comprising means for moving the frame (20) in two perpendicular directions.

3. A tool according to claim 2, **characterized in that** the frame (20) has a peripheral edge (22, 23) connected to the collecting element (14) placed inside the frame (20), by means of the linking arm (21).

4. A tool according to one of claims 1 to 3, **characterized in that** the collecting element (14) is disc-shaped.

5. A tool according to claim 4, **characterized in that** said aperture (15) is frustoconical.

6. A method for manufacturing a part by selectively melting a powder (2) according to one of claims 1 to 5, consisting in forming, layer by layer, a part, by jointly moving the beam (11) and the collecting element (14), so that at least part of the spray (24) formed during the melting of the powder (2) by the beam (11) is collected by the collecting element (14) by solidifying the melted powder spray (24) having impacted or fallen onto the collecting element (14).
